## Europäisches Patentamt

## European Patent Office

## Office européen des brevets

(11) Veröffentlichungsnummer: **0 308 691**

**A1**

(12) # EUROPÄISCHE PATENTANMELDUNG

(21) Anmeldenummer: **88114080.0**

(22) Anmeldetag: **29.08.88**

(51) Int. Cl.4: **G21C 1/02 , G21C 13/02 , G21C 15/18**

(30) Priorität: **11.09.87 DE 3730656**

(43) Veröffentlichungstag der Anmeldung:
**29.03.89 Patentblatt 89/13**

(84) Benannte Vertragsstaaten:
**AT BE CH DE ES FR GB IT LI NL SE**

(71) Anmelder: **INTERATOM Gesellschaft mit beschränkter Haftung**
**Friedrich-Ebert-Strasse**
**D-5060 Bergisch-Gladbach 1(DE)**

(72) Erfinder: **Hammers, Heinz-Wilhelm**
**Richard-Zörner-Strasse 3A**
**D-5060 Bergisch Gladbach 1(DE)**

(74) Vertreter: **Mehl, Ernst, Dipl.-Ing. et al**
**Postfach 22 13 17**
**D-8000 München 22(DE)**

(54) **Kernreaktor in Modulbauweise.**

(57) An einem flüssigmetallgekühlten Kernreaktor, insbesondere einem Brutreaktor, nach dem Modulprinzip wird auf dem Boden (5) einer Reaktorkaverne ein Tragpodest (6) angeordnet, das zentriert übereinandergestapelt einen Doppeltank (12), einen Reaktortank (1), eine Tragplatte (7), eine Gitterplatte (9), einen Reaktorkern (12), einen Schacht (15) und einen Instrumentierungsdeckel (22) mit Kontroll- und Abschalteinrichtungen trägt. Mit dieser Anordnung eines Reaktortanks und seiner Einbauten wird gegenüber der üblichen Bauweise nicht nur der Bauaufwand vermindert, sondern es werden auch Vorteile bei Betrieb, Inspektion und Reparatur bzw. Auswechselung erreicht.

FIG 1

**EP 0 308 691 A1**

## Kernreaktor in Modulbauweise

Die vorliegende Erfindung betrifft einen flüssigmetallgekühlten Kernreaktor, insbesondere einen Brutreaktor, nach dem Modulprinzip. Nach diesem auch bei anderen Reaktortypen bereits diskutierten Prinzip soll die Gesamtleistung einer Kernenergieanlage nicht mehr mit einem einzigen großen Reaktorkern, sondern mit mehreren kleinen Reaktorkernen erreicht werden. Auf diese Weise kann bei Ausfall, Inspektion oder Wartung eines Reaktorkerns die Gesamtanlage mit etwas verringerter Leistung weiter betrieben werden. Gegenüber den bisher gebauten bzw. geplanten flüssigmetallgekühlten Brutreaktorkraftwerken mit einer Einzelleistung von 1000 MW oder mehr können Kraftwerke bestehend aus mehreren Modulreaktoren mit einer Einzelleistung von jeweils ca. 200 MW einige Nachteile in bezug auf Brennstoffeinsatz und Brutrate aber auch erhebliche Vorteile beim Bau und Betrieb haben.

In dem deutschen Patent 31 15 844.7 wurden erstmalig natriumgekühlte Kernreaktoren nach dem Modulprinzip vorgeschlagen und die Vorteile dieses Prinzips dargestellt. Die dort vorgeschlagene Anordnung der elektromagnetischen Pumpen außerhalb des Reaktortanks hat erhebliche Vorteile in bezug auf Montage, Inspektion und Auswechselung dieser Pumpen. Sie stört jedoch die ungehinderte Wärmeabfuhr durch die Tankwand nach außen, wenn die normale Wärmeabfuhr über den Sekundärkreis an den Dampfkreis ausfällt. Diese passive Wärmeabfuhr ist aber für Modulreaktoren von besonderer Bedeutung und trägt erheblich zu deren einfacher und kostengünstiger Bauweise bei. Der Reaktortank ist in üblicher Weise in einem Doppeltank angeordnet, an seinem unteren Ende in einem Fußring gelagert und an seinem oberen Ende mit einem Ring gegen einen abnehmbaren Tragring abgestützt, der auf dem oberen Rand einer Reaktorkaverne aus Beton ruht.

In der europäischen Patentanmeldung 0 118 016 werden noch einmal die Vorteile des Modulprinzips bei Transport und Montage ausführlich beschrieben und zahlreiche konstruktive Einzelheiten näher erläutert. Nachteile dieser Konstruktion sind die dort vorgesehenen Durchdringungen der Tankaußenwand und die Anordnung einer zentralen elektromagnetischen Pumpe unterhalb des Reaktortanks, die zu einer erheblichen Vergrößerung der Bauhöhe führt und erheblichen zusätzlichen Aufwand verursacht bei der Inspektion und Auswechselung dieser Pumpen, weil das Kühlmittel abgelassen werden muß, so daß der Kern nicht mehr gekühlt werden kann.

In der französischen Patentanmeldung 2 221 791 wird ein flüssigmetallgekühlter Kernreaktor großer Leistung, also nicht nach dem Modulprinzip, beschrieben. Ein Doppeltank steht auf Stützen in der Reaktorkaverne und trägt den Reaktortank, der wiederum mit einer besonderen Struktur den Reaktorkern trägt. Ein drehbarer Instrumentierungsdekkel stützt sich auf den oberen Rand der Reaktorkaverne aus Beton ab und trägt auch die bis in den Reaktorkern hineinreichenden Kontrollstäbe.

Aufgabe der vorliegenden Erfindung ist ein flüssigmetallgekühlter Kernreaktor nach dem Modulprinzip, insbesondere ein Brutreaktor, der gegenüber den bisher gebauten bzw. geplanten großen Brutreaktoren nicht nur den Bauaufwand vermindert, sondern auch Vorteile bei Betrieb, Inspektion und Reparatur bzw. Auswechselung bietet. Weiterhin soll die immer wieder diskutierte Möglichkeit, daß Risse im Tank oder in der Struktur fortschreiten, dabei der Kern sich absenkt und die am Deckel aufgehängten Kontrollstäbe aus dem Kern herausgezogen werden, prinzipiell ausgeschlossen werden. Darüber hinaus sollen Relativbewegungen zwischen Reaktorkern und Kontrollstäben bei Erdbeben reduziert oder ganz vermieden werden. Damit soll ein erheblicher Aufwand für sicherheitstechnische Maßnahmen vermieden werden.

Zur Lösung dieser Aufgaben wird ein Kernreaktor nach dem 1. Anspruch vorgeschlagen. Die erstmalig vorgeschlagene Stapelung wesentlicher Bauteile zentriert übereinander wurde erst möglich durch eine starke Reduzierung des Reaktordurchmessers. Mit dieser Anordnung werden Inspektion und Wartung erleichtert. vertikale Zugbeanspruchungen im Tank und seinen Einbauten, die zu einer Vergrößerung eventueller Risse führen könnten, vermieden und vertikale oder horizontale Relativbewegungen zwischen Reaktorkern und den im darüberliegenden Deckel eingebauten Kontroll- und Abschalteinrichtungen bei Erdbeben ausgeschlossen. Der reduzierte Reaktordurchmesser vereinfacht die Beherrschung der bei Temperaturänderungen auftretenden Relativbewegungen zwischen den Auflagerflächen der übereinandergestapelten Bauelemente, so daß die bei den bisher üblichen großen Reaktoren vorgeschlagenen aufwendigen Lagerkonstruktionen, wie z. B. Rollen oder elastische Elemente oder Temperaturabbaustrecken, vermieden werden können, die ja auch versagen und damit zu einem Absenken des Tanks führen können.

Die im 2. und 3. Anspruch vorgeschlagene Anordnung hat besondere Vorteile bei der Inspektion oder Auswechselung der genannten Bauteile, weil Reaktorkern mit Schacht und Instrumentierungsdeckel nicht entfernt werden müssen.

Die im 4. Anspruch vorgeschlagene Anordnung der elektromagnetischen Pumpen erleichtert nicht nur die Auswechselung, sondern vermeidet auch eine zusätzliche Abdichtung zwischen diesen beiden Bauteilen, die fernbedient montierbar sein müßte.

Die im 5. Anspruch vorgeschlagene Strömungsführung verbessert die Wärmeabfuhr durch die Tankaußenwand nach außen im Falle des Naturumlaufs.

Die im 6. Anspruch vorgeschlagene Gitterplatte kann in ihren den Kühlstrom umschließenden Teilen gegenüber den bisher bekannten Gitterplatten wesentlich dünnwandiger und dementsprechend leichter ausgeführt werden. Sie kann sich bei einem störfallbedingten Anstieg der Kühlmitteltemperatur radial schnell ausdehnen und vergrößert auf diese Weise den Abstand der Kernelemente, was zu einer Verminderung der Reaktivität beiträgt.

Die im 7. Anspruch vorgeschlagene Ausführung führt ebenfalls zu einer selbsttätigen Verminderung der Reaktivität bei höheren Temperaturen, weil die sich bei höheren Temperaturen stärker als der Schacht ausdehnenden Gestänge der Abschalt- oder Kontrollstäbe die Absorber weiter in den Reaktorkern hineindrücken. Der Schacht kann beispielsweise aus einem ferritischen und das Gestänge aus einem austenitischen Material, das gewöhnlich einen höheren Temperaturausdehnungskoeffizienten als Ferrit hat, hergestellt sein.

Mit der im 8. Anspruch vorgeschlagenen Ausgestaltung werden horizontale und vertikale Relativbewegungen, beispielsweise bei einem Erdbeben, zwischen Instrumentierungsdeckel und Reaktorkern vermieden, so daß die am Instrumentierungsdeckel aufgehängten Kontroll- und Abschaltstäbe ihre Lage zum Kern nicht verändern können.

Mit dem im 9. Anspruch vorgeschlagenen Kamin wird vermieden, daß heißes Flüssigmetall unter Umgehung des Wärmetauschers von der Pumpe angesaugt wird. Hierdurch entsteht eine stagnierende Schicht flüssigen Metalls zwischen dem Kamin und dem Schacht, die den kälteren Ringraum des Wärmetauschers und der Pumpe vom heißeren Schacht isoliert.

Die im 10. Anspruch vorgeschlagene Absorberschicht, beispielsweise aus Borkarbid, ist besonders wirksam, weil die genannten Teile dem Reaktor gegenüber bereits durch eine erhebliche Schicht flüssigen und festen Metalls geschützt ist.

Die Figur 1 zeigt einen senkrechten Längsschnitt durch einen erfindungsgemäßen Modulreaktor einschließlich seiner Anordnung in einer Kaverne.

Die Figuren 2 und 3 zeigen jeweils einen Querschnitt durch Figur 1.

Figur 4 zeigt in vergrößerter Darstellung den unteren linken Teil aus Figur 1.

Figur 5 zeigt in nochmals vergrößerter Darstellung eine Einzelheit aus Figur 4.

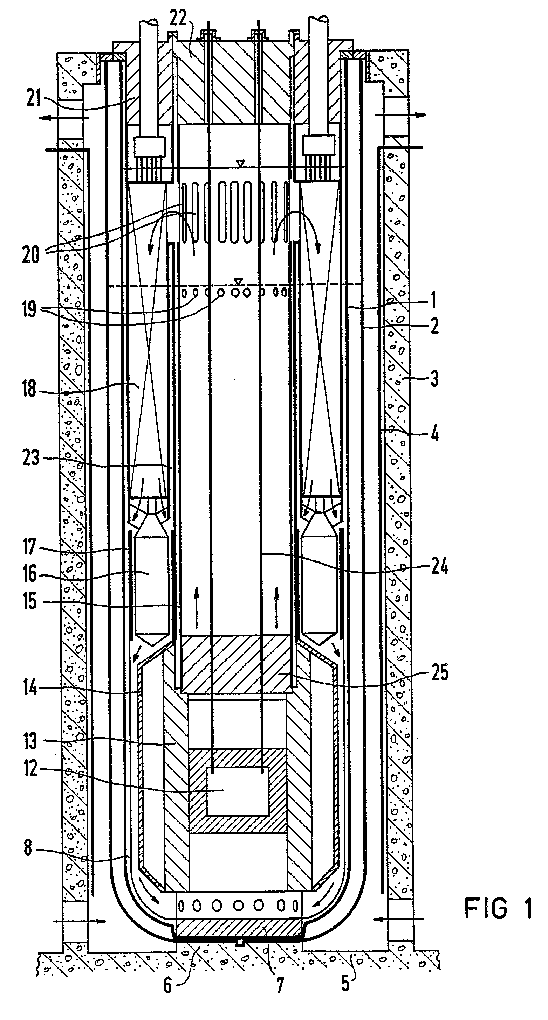

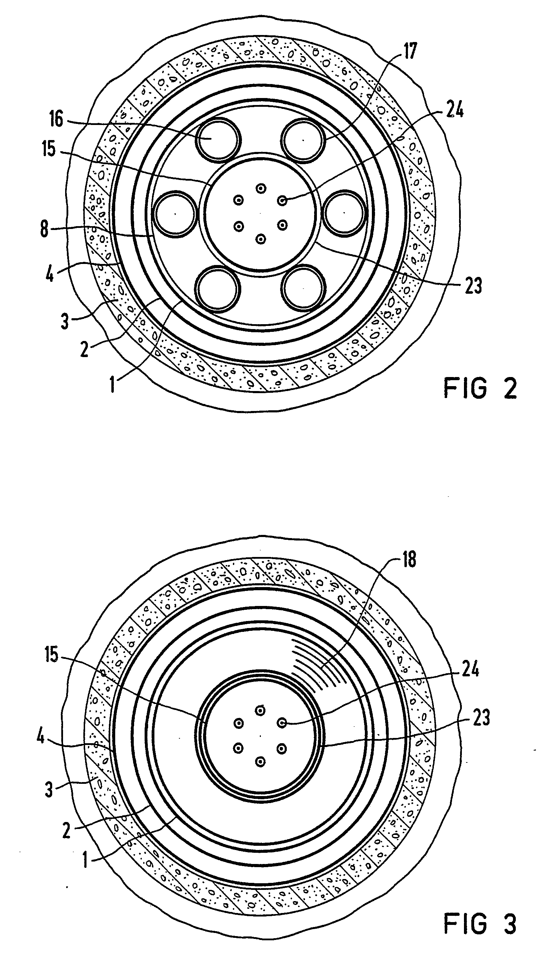

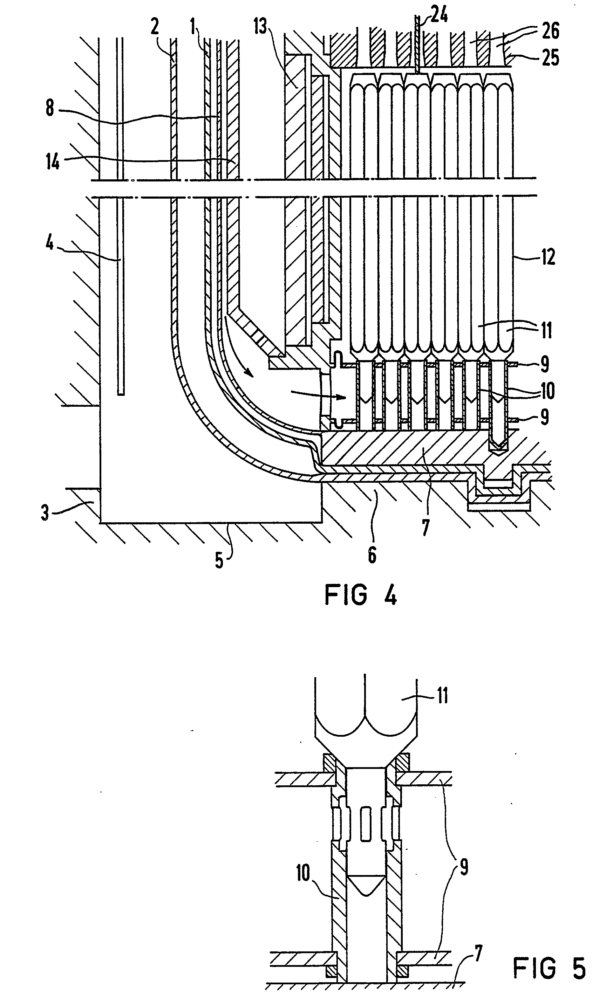

In den Figuren 1 bis 4 ist der Reaktortank 1 von einem Doppeltank 2 umgeben und steht in einer Reaktorkaverne 3, die an ihrer Innenseite einen Flächenkühler 4 trägt. Der Boden 5 dieser Kaverne ist als Tragpodest 6 ausgebildet und trägt übereinander zentriert den Doppeltank 2, den Reaktortank 1, darauf eine Tragplatte 7, die seitlich an eine äußere Strömungsführung 8 angeschlossen ist, darauf eine Gitterplatte 9 aus zwei durch Rohrstutzen 10 verbundenen Lochplatten 9a und 9b, wobei diese Rohrstutzen 10 das Gewicht der Kernelemente 11 auf die Tragplatte 7 überleiten. Nicht dargestellt sind Gleitfolien aus einem anderen Metall zwischen den ebenen Auflageflächen der übereinander gestapelten Teile. Der in Figur 1 nur schematisch, aber später in Figur 4 näher dargestellte Reaktorkern 12 ist ringsum von einer mehrteiligen metallischen Abschirmung 13 umgeben, die wiederum von einer inneren Strömungsführung 14 umgeben ist und oberhalb des Kerns verriegelbar mit einem Schacht 15 verbunden ist. Die Strömungsführung 14 ist nach oben durch einen Kamin 23 verlängert, der zunächst von mehreren elektromagnetischen Pumpen 16, 17 und darüber von einem Wärmetauscher 18 umgeben ist. Der Wärmetauscher 18 kann aus einem einzigen ringförmigen Rohrbündel oder aus mehreren Teilrohrbündeln zusammengesetzt sein. Nicht dargestellt, aber ebenfalls möglich, ist auch die Verwendung mechanischer Pumpen, wobei die Pumpenwellen zwischen den Teilrohrbündeln des Wärmetauschers 18 nach oben zum Antriebsmotor über den Ringdeckel 21 geführt werden. Im oberen Bereich trägt der Schacht 15, der Kamin 23 und der innere Mantel des Wärmetauschers 18 zunächst gleichmäßig über den Umfang verteilte kleine Löcher 19, darüber hat der Schacht 15 größere Schlitze 20, durch die das vom Reaktorkern 12 emporsteigende heiße Natrium zu dem Wärmetauscher 18 fließen kann, der zusammen mit dem aktiven Teil 16 der elektromagnetischen Pumpen an einem Ringdeckel 21 befestigt ist, der unabhängig vom Instrumentierungsdeckel 22 montiert werden kann, der vom Schacht 15 getragen wird. Der Schacht 15 verbindet die Abschirmung 25 mit dem Instrumentierungsdeckel 22 und enthält sowohl das Gestänge 24 für die Regelung und Abschaltung als auch die Leitungen für die Instrumentierung des Reaktorkerns 12. Der Instrumentierungsdeckel 22 ist gegenüber dem Ringdeckel 21 durch hier nicht abgebildete, aber bei flüssigmetallgekühlten Kernreaktoren übliche aufblasbare Dichtungen so abgedichtet, daß eine axiale Bewegung der Bauteile gegeneinander möglich ist. Oberhalb der aufblasbaren Dichtungen ist eine ebenfalls bei Kernreaktoren bekannte und deshalb hier nicht abgebildete Hub- und Drehvorrichtung für den Deckel 22 angeordnet, die beim Kernelementwechsel benötigt wird.

Figur 4 zeigt mit den selben Bezeichnungen wie in den Figuren 1 bis 3, wie auf dem Tragpodest 6 am Boden 5 der Reaktorkaverne 3 der Doppeltank 2, der Reaktortank 1, die Tragplatte 7 und die Gitterplatte 9 übereinander zentriert gestapelt sind. Auch hier sind die bereits oben erwähnten Gleitfolien nicht im einzelnen dargestellt. Der aus den Kernelementen 11 bestehende Reaktorkern 12 wird zunächst von einer mehrteiligen metallischen Abschirmung 13 umgeben, die wiederum von einer ebenfalls abschirmend wirkenden Strömungsführung 14 umgeben ist. Auf der Abschirmung 13 ruht der Schacht 15 und eine zusätzliche axiale Abschirmung 25 über den Kernelementen 11. Diese Abschirmung 25 weist senkrechte Durchbrüche 26 für den Durchtritt des Kühlmittels, zur Aufnahme der Gestänge 24 und diverser Kerninstrumentierungen und für den Wechsel der Kernelemente auf.

Figur 5 zeigt ein Kernelement 11, das mit seinem unteren Teil in einem Rohrstutzen 10 geführt und von diesem getragen wird. Diese Rohrstutzen 10 halten die aus zwei Lochplatten 9a und 9b bestehende Gitterplatte 9 zusammen und übertragen das Gewicht der Kernelemente 11 auf die Tragplatte 7. Diese Tragplatte wird durch die untere Lochplatte 9b vor schnellen Temperaturänderungen geschützt.

Bei Normalbetrieb fließt das heiße Natrium aus dem Reaktorkern 12 durch den Schacht 15 nach oben und durch die Löcher 19 bzw. Schlitze 20 zu dem Wärmetauscher 18, wobei es seine Wärme an einen Sekundärkühlkreis abgibt. Daraufhin wird das abgekühlte Natrium im Förderspalt der elektromagnetischen Pumpen, der von einem aktiven Teil 16 und einem passiven Teil 17 gebildet wird abwärts und zwar zwischen der Innenwand der Strömungsführung 8 und der Außenwand der Strömungsführung 14 zur Gitterplatte 9 gedrückt, von wo es in üblicher Weise durch Schlitze in den Rohrstutzen 10 in das untere Ende der Kernelemente 11 geleitet wird, um deren Wärme aufzunehmen. Bei Ausfall der Pumpen fließt das Natrium in gleicher Weise im Naturumlauf, wobei es ebenfalls seine Wärme an den Sekundärkühlkreis abgibt. Wenn dieser ausfallen sollte, wird die Wärme über den Tank 1 und den Doppeltank 2 an die Flächenkühler 4 oder an ein zirkulierendes Gas in der Reaktorkaverne 3 abgegeben. Für den Wechsel der Kernelemente wird eine an sich bekannte Wechselmaschine über den Deckel 22 gefahren, die die abgebrannten Kernelemente 11 direkt aus dem Reaktorkern 12 herausnimmt und neue Kernelemente einsetzt.

Hierbei hebt die bereits vorher erwähnte Hub- und Drehvorrichtung, die zwecks Inspektion oder Auswechselung abmontiert werden kann, den Instrumentierungsdeckel 22 mit Schacht 15 und Abschirmung 25 senkrecht an und dreht ihn solange, bis eine in den Figuren nicht abgebildete Öffnung über das zu wechselnde Kernelement gelangt. Danach wird das gewünschte Kernelement in eine nach außen abgedichtete Flasche hinein gezogen. Falls eine Reparatur an Wärmetauschern und Pumpen notwendig wird, wird eine besondere Komponentenwechselflasche über den Ringdeckel 21 gefahren, mit der ebenfalls in inertisierter und abgedichteter Atmosphäre der ringförmige Wärmetauscher 18 mit den daran befestigten aktiven Teilen 16 der elektromagnetischen Pumpen ausgewechselt werden kann. Wechselflaschen dieser Art sind bekannt und üblich, um bei den eingangs erwähnten flüssigmetallgekühlten Brutreaktorkraftwerken Wärmetauscher und Pumpen zu inspizieren oder auszuwechseln. Die Abmessungen des erfindungsgemäßen Modulreaktors, besonders der relativ kleine Durchmesser von ca. 5 m, gestatten es, auf diese Weise auch den Schacht 15 oder die den Reaktorkern umgebenden Teile 7, 8, 9, 10, 13, 14, 17 und 23 oder sogar einen ganzen Reaktorbehälter 1 auszuwechseln. Nach dem oben erwähnten Modulprinzip werden die übrigen Modulreaktoren des gleichen Kraftwerks während solcher Reparaturen wie auch während des Kernelementwechsels in Betrieb gehalten, so daß eine hohe Verfügbarkeit des Kraftwerks gewährleistet ist. Auf diese Weise ist auch am Ende der Lebenszeit des Reaktors eine schnelle und kostengünstige Entsorgung mit der geringstmöglichen Strahlenbelastung gewährleistet.

**Ansprüche**

1. Flüssigmetallgekühlter Kernreaktor nach dem Modulprinzip, dessen von einem Doppeltank umgebener und auf dem Boden einer Reaktorkaverne stehender Reaktortank auf einer Gitterplatte einen ringsum abgeschirmten Reaktorkern trägt und einen vom Reaktorkern nach oben zum Instrumentierungsdeckel führenden Schacht sowie diesen Schacht umgebende Wärmetauscher und Primärpumpen enthält, **dadurch gekennzeichnet,** daß auf dem Boden der Reaktorkaverne (5) ein Tragpodest (6) vorhanden ist und dieses zentriert übereinander gestapelt den Doppeltank (2), den Reaktortank (1), eine Tragplatte (7), die Gitterplatte (9), den Reaktorkern (12), den Schacht (15) und den Instrumentierungsdeckel (22) trägt.

2. Kernreaktor nach Anspruch 1, **dadurch gekennzeichnet**, daß Primär-Sekundär-Wärmetauscher (18) und Primärpumpen (16) an einem Ringdeckel (21) aufgehängt sind, der sich auf den Reaktortank (1) abstützt.

3. Kernreaktor nach Anspruch 2, **dadurch gekennzeichnet**, daß Ringdeckel (21) und Instrumentierungsdeckel (22) unabhängig voneinander montierbar sind.

4. Kernreaktor nach Anspruch 1 mit elektromagnetischen Primärpumpen, deren Förderspalt aus einem elektrisch aktiven Teil mit den elektromagnetischen Spulen und einem passiven Teil mit einem magnetischen Rückschluß besteht, **dadurch gekennzeichnet**, daß der aktive Teil (16) am Ringdeckel (21) befestigt und der passive Teil (17) von der Abschirmung (13) getragen ist.

5. Kernreaktor nach Anspruch 1, **dadurch gekennzeichnet**, daß an die Abschirmung (13) unterhalb der Pumpen (16, 17) eine die Abschirmung umgebende Strömungsführung (14) angeschlossen ist.

6. Gitterplatte aus zwei Rohrböden für einen Kernreaktor nach Anspruch 1, **dadurch gekennzeichnet**, daß diese Gitterplatte (9) senkrechte Rohrstutzen (10) zur Halterung der Kernelemente (11) enthält, die sich auf die Tragplatte (7) abstützen.

7. Kernreaktor nach Anspruch 1, **dadurch gekennzeichnet**, daß das Gestänge (24) der Abschalt- oder Kontrollstäbe vom Reaktorkern (12) zum Instrumentierungsdeckel (22) einen höheren thermischen Ausdehnungskoeffizienten hat als der Schacht (15).

8. Kernreaktor nach Anspruch 1, **dadurch gekennzeichnet**, daß der von der Abschirmung (13) des Reaktorkerns (12) getragene Schacht (15) an der Abschirmung (13) verriegelt ist.

9. Kernreaktor nach Anspruch 1, **dadurch gekennzeichnet**, daß der Ringraum zwischen Pumpen (16, 17) und Wärmetauschern (18) durch einen von der Abschirmung (13) getragenen Kamin (23) gegenüber dem Schacht (15) abgesperrt ist.

10. Kernreaktor nach Anspruch 5, **dadurch gekennzeichnet**, daß der untere Bereich des Kamins (23) und diese Strömungsführung (14) mit einer Absorberschicht bedeckt sind.

87 P 6723

FIG 1

87 P 6723

FIG 2

FIG 3

87 P 6723

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | FR-A-2 221 791 (BABCOCK-CEA) <br> * Seite 2, Zeile 38 - Seite 3, Zeile 28; Abbildung 2 * <br> --- | 1 | G 21 C 1/02 <br> G 21 C 13/02 <br> G 21 C 15/18 |
| Y | DE-A-2 443 961 (W.M. KOWIN et al.) <br> * Seite 5, letzter Absatz - Seite 6, Absatz 2; Seite 5, Absatz 4-7; Abbildungen 1,2 * <br> --- | 1 | |
| A | EP-A-0 155 883 (CEA) <br> * Seite 5, Zeile 24 - Seite 6, Zeile 12: Abbildungen 1,2 * <br> --- | 1,2 | |
| A | EP-A-0 055 963 (CEA) <br> * Seite 6, Zeile 18 - Seite 7, Zeile 18; Abbildung * <br> --- | 1,2 | |
| A | GB-A-2 182 799 (WESTINGHOUSE) <br> * Seite 4, Zeilen 17-51; Abbildung 2 * <br> --- | 1 | |
| A,D | DE-A-3 115 844 (INTERATOM) <br> * Seiten 5-6, Zeile 20; Abbildung * <br> ----- | 1,3,4 | **RECHERCHIERTE SACHGEBIETE (Int. Cl.4)** <br><br> G 21 C 1 <br> G 22 C 13 |

Der vorliegende Recherchenbericht wurde für alle Patentansprüche erstellt

| Recherchenort | Abschlußdatum der Recherche | Prüfer |
|---|---|---|
| DEN HAAG | 14-12-1988 | JANDL F. |